# EUROPEAN PATENT SPECIFICATION

(11) **EP 2 320 617 B1**
(45) Date of publication and mention of the grant of the patent: **05.04.2017**
(21) Application number: 08876813.0
(22) Date of filing: 27.11.2008
(51) Int. Cl.: H04L 29/06, H04L 29/08, H04N 21/6405, H04N 21/643, H04N 21/6583, H04L 12/18

(54) **METHOD, DEVICE AND SYSTEM FOR PUSHING INFORMATION BASED ON INTERNET PROTOCOL TELEVISION**
VERFAHREN, EINRICHTUNG UND SYSTEM FÜR INFORMATIONS-PUSH AUF DER BASIS VON INTERNET-PROTOKOLL-FERNSEHEN
PROCÉDÉ DISPOSITIF ET SYSTÈME POUR POUSSER DES INFORMATIONS BASÉ EN TÉLÉVISION SUR INTERNET PROTOCOL

(30) Priority: 28.08.2008 CN 200810213921
(43) Date of publication of application: 11.05.2011
(73) Proprietor: ZTE Corporation, Shenzhen, Guangdong 518057 (CN)
(72) Inventor: XIA, Hongfei, Guangdong 518057 (CN)
(74) Representative: Studio Torta S.p.A.
(86) International application number: PCT/CN2008/073217
(87) International publication number: WO 2010/022570

(56) References cited:
- CN-A- 1 946 162
- CN-A- 1 972 468
- CN-A- 101 001 151
- "Telecommunications and Internet converged Services and Protocols for Advanced Networking (TISPAN); IPTV Architecture; IPTV functions supported by the IMS subsystem; ETSI TS 182 027", IEEE, LIS, SOPHIA ANTIPOLIS CEDEX, FRANCE, vol. TISPAN, no. V2.0.0, 1 February 2008 (2008-02-01), XP014040791, ISSN: 0000-0001
- OPEN IPTV FORUM: "Open IPTV Forum Functional Architecture V 1.1", INTERNET CITATION, 15 January 2008 (2008-01-15), page COMPLETE, XP007906507, Retrieved from the Internet: URL:http://www.openiptvforum.org/docs/Open IPTV-Functional_Architecture-V1_1-2008-01- 15_APPROVED.pdf [retrieved on 2008-12-01]

## Description

### Technical field

The present invention relates to the field of communication technologies, in particular to a method, a device and a system for pushing information based on internet protocol television.

### Background of the invention

Currently, the frame structure of the Next Generation Network (NGN) has been basically determined. In addition to a management level, the NGN also comprises a user level, a transmission level, a service control level and an application level, wherein IP Multimedia Subsystem (IMS) is an aggregate of the main function entities of the service control level. Registration, certification, authentication and management and guarantee of Quality of Service (QoS) of user and terminal equipment can be achieved by means of the IMS. Meanwhile, as a system based on Session Initiation Protocol (SIP), the IMS supports the access of multiple kinds of users, the management of nomadism and mobility of the user and the interconnection and service integration with other conventional networks or the Next Generation Networks. At present, the IMS becomes the main technology and system frame of the integration of the Next Generation Networks.

Interactive network television, also referred to as Internet Protocol Television (IPTV), is a general name of devices which can provide, via an IP bearer network, users with services such as live broadcast, video on demand and time-shifted broadcast of television programs being able to support interactivity. IPTV accesses broadband network using Asymmetrical Digital Subscriber Line (ADSL) or Ethernet via telecom channels, and transmits television signals via internet protocol with a TV-set in combination with a Set Top Box (STB) as the main terminal, so as to provide a plurality of digital media services including television programs.

At present, functions such as video on demand, live broadcast and video recording and so on can be provided for user terminals through integration of NGN and IPTV. However, these functions are all achieved on the basis of an initiative request of user equipment, and as a result, the types of services achieved by operators are very limited and it is not helpful to increase the competitiveness of the IPTV system.
XP 014040791 and XP 007906507 provide respective technical solutions; however, the above mentioned problem still remains unsolved.

### Summary of the invention

In view of the above, the present invention provides an improved technical solution of the broadcasting for live broadcast services so as to solve the problem in the prior art that only the content services requested initiatively the user equipment can be provided, resulting in that it is difficult for operators to carry out services initiatively.

The present invention is defined by the subject matter of independent claims 1, 5 and 7.

According to one aspect of the present invention, there is provided a method for pushing information based on IPTV applied in the Next Generation Network system including Internet Protocol Television (IPTV) serving control functions, service control functions and transport processing functions.

The method for pushing information based on IPTV according to the present invention comprises: the IPTV serving control functions transmitting a session initiation request of broadcasting information to a user equipment via the service control functions, wherein identification of the information is carried in the session initiation request; and the user equipment receiving the session initiation request, and interacting with the transport processing functions according to the identification carried in the session initiation request to enable the user equipment to join a multicast channel of the information corresponding to the identification and receive multicast stream after the user equipment decides to accept broadcasting the information.

Preferably, the step of the IPTV serving control functions transmitting a session initiation request of broadcasting information to a user equipment via the service control functions comprises: the IPTV serving control functions transmitting the session initiation request to the service control functions, wherein request parameter including identification information list of the user equipment are carried in the session initiation request; and the service control functions forwarding the session initiation request to one or more user equipments corresponding to each identification recorded in the identification information list according to the identification information list carried in the session initiation request.

Preferably, before the user equipment interacts with the transport processing functions, the method also comprises: the IPTV serving control functions and the user equipment establishing a channel of the information and reserving resources required by the user equipment broadcasting the information.

Preferably, after reserving the resources required by the user equipment broadcasting the information, the method further comprises: the service control functions receiving a session initiation response message from the user equipment, wherein identification information for identifying whether the user equipment broadcasts the information is carried in the session initiation response message; and the service control functions judging whether the user equipment accepts broadcasting the information according to the identification information carried in the session initiation response message, wherein when the judgment result is yes, the service control functions submit the reserved resources and forward the session initiation response message to the IPTV serving control functions, while when the judgment result is no, the service control functions forward the session initiation response message to the IPTV serving control functions and end the flow.

Preferably, the information is live broadcast service.

Preferably, in the case that multimedia sub-system is adopted in the Next Generation Network, the service control functions are core multimedia sub-system.

According to another aspect of the present invention, there is provided a system for pushing information based on IPTV.

The system for pushing information based on IPTV according to the present invention comprises IPTV serving control functions, service control functions and transport processing functions, wherein the IPTV serving control functions are configured to transmit a session initiation request of broadcasting information to a user equipment via the service control functions; the service control functions are configured to receive the session initiation request from the IPTV serving control functions and forward the session initiation request to the user equipment according to the information carried in the session initiation request; and the transport functions are configured to interact with the user equipment and transmit multicast stream to the user equipment.

Preferably, the service control functions are core multimedia sub-system.

Preferably, the information is live broadcast service.

According to another aspect of the present invention, there are provided IPTV serving control functions.

The IPTV serving control functions according to the present invention comprise: an acquiring module, configured to acquire identification of information recommended to a user; and a transmitting module, configured to transmit a session initiation request in which the identification is carried to the user equipment via service control functions, wherein the session initiation request is used to request the user equipment to broadcast the information corresponding to the identification.

Preferably, the IPTV serving control functions also comprise: a reserving module, configured to establish channel of the information with the user equipment and reserve resources required by the user equipment broadcasting the information.

Preferably, the information is live broadcast service.

By means of at least one of the above solutions, network side transmits an session initiation request to one or more user equipments to request the user to broadcast the recommended information, then the user receiving the above request can choose to immediately watch the information recommended by the network side, which solves the problem that content services can only be achieved by initiative request of user equipment, and can increase content services achieved by operators.

Other features and advantages of the present invention will be described in the following description and partly become obvious from the description, or be understood by implementing the present invention. The objects and other advantages of the present invention can be realized and obtained through the structures indicated by the description, claims and drawings.

### Brief Description of the Drawings

The drawings illustrated here provide further understanding of the present invention and constitute a part of the specification. The embodiments serve to explain the present invention together with the drawings without limiting the scope of the present invention, in which:
Figure 1 is a structure schematic diagram of the IPTV system based on NGN;
Figure 2 is a structure block diagram of the system for pushing information based on IPTV according to an embodiment of the present invention;
Figure 3A is a structure block diagram of IPTV serving control functions according to an embodiment of the present invention;
Figure 3B is a structure block diagram of IPTV serving control functions according to a preferable embodiment of the present invention;
Figure 4 is a flowchart of the method for pushing information based on IPTV according to an embodiment of the present invention;
Figure 5 is a flowchart of a detailed implementing process of the embodiment of the present invention;
Figure 6 is a detailed implementation flow for reserving resources in an embodiment of the present invention; and
Figure 7 is another detailed implementation flow for reserving resources in an embodiment of the present invention.

### Detailed Description of Embodiments

### Brief Description on Functions

As stated above, the present invention provides a solution for pushing information based on IPTV, aiming at solving the problem in the prior art that content services can only be performed by initiative request of user equipment. In this technical solution, IPTV serving control functions transmit a session initiation request for broadcasting information to one or more user equipments via service control functions to recommend information to one or more users. When the user equipment receiving the session initiation request accepts broadcasting the information, the user equipment joins itself into a multicast channel by interacting with transport functions, and the user equipment begins to receive multicast stream and broadcast the information recommended by the network side.

In the above identification and description information of the recommended information are carried in the session initiation request transmitted by the IPTV serving control functions, wherein the description information can be brief description of the information such as news, weather forecast, or interview etc., according to which the user can judge whether to broadcast that information.
Preferably, the information recommended to the user is live broadcast service to be broadcasted, and before the live broadcast service is broadcasted, the IPTV serving control functions transmit the above session initiation request to the user equipment.

The descriptions below only provide (plural) exemplary embodiments and do not serve to restrict the scope, applicability or configuration of this disclosure. On the contrary, the following descriptions of the (plural) exemplary embodiments can provide an illustration of exemplary embodiments to achieve this disclosure to those skilled in the art. It is understood that various alterations and changes may be made to the function and deployment of components within the scope illustrated by the claims.

Additionally, it is noted that embodiments can be described as the processing illustrated according to operation program diagram, flow chart, data flow chart, structure diagram or block diagram. In a flow chart operations may be described as a sequential process, but parallel or concurrent operations are possible. Besides, sequences of operations may be re-ordered. The processing is ended by finishing the operations but additional steps not illustrated in the accompanying drawings can be included. Operations can be implemented in a manner of method, function, flow, sub-program, auxiliary program etc. In the case that the operation corresponds to a function, the end of the operation corresponds to the return point from the function to calling function or main function.

The preferable embodiments of the present invention will be illustrated in combination with the accompanying drawings in details as follows and it is understood that the preferable embodiments described here only serve to explain the present invention and are not intended to restrict it.

If there is no conflict, the embodiments and the technical features in the embodiments can be combined with each other.

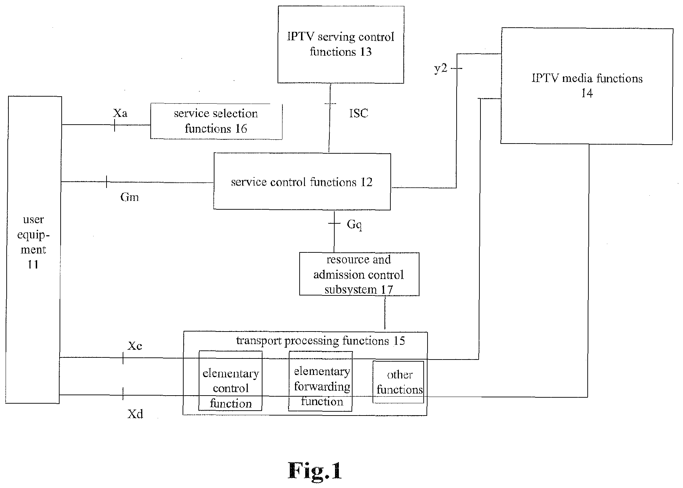

To facilitate understanding, the IPTV system based on NGN shall first be briefly described in combination with Figure 1 as follows.

Figure 1 is a structure schematic diagram of the IPTV system based on NGN. As shown in Figure 1, the IPTV system based on NGN mainly comprises: a user equipment (UE) 11, service control functions (which are a core IMS in the case that the IMS is adopted in the NGN) 12, IPTV serving control functions (IPTV SCF) 13, IPTV Media Functions (IPTV MF) 14, transport processing functions (TPF) 15, service selection functions (SSF) 16 and resource and admission control subsystem (RACS) 17. The above entities shall be described respectively as follows.

The UE 11 can be a mobile phone equipped with mobility, a set top box of a fixed network, a soft terminal realized on the basis of software that can achieve functions of a set top box as well as function entities such as home gateway. The UE can achieve IPTV services such as video on demand, live broadcast etc. by interacting with users.

Service control functions 12 are connected with UE 11 via Gm interface and with resource and admission control subsystem 17 via Gq interface. As an aggregate of main functions in NGN service control level, Service control functions 12 are mainly used for session control, service certification, authentication, charging etc.. The functions are the Core IMS in the circumstance of an IMS network. If service control functions 12 are the Core IMS, they mainly comprise core modules such as P-CSCF/I-CSCF/S-CSCF core call session control. The Core IMS serves to provide session control mechanism based on SIP, perform certification and authentication to IPTV terminal users and request the resource and admission control subsystem to allocate resources and so on. The Core IMS conducts SIP session and achieves functions of security, QoS, charging and roaming etc. by interacting with IPTV terminals, IPTV application functions and contents distribution functions.

IPTV serving control functions 13, connected with service control functions 12 via ISC interface, serve to provide service authentication at the time of initiating or modifying a session, including checking the information of the user and examining whether the user can make use of the selected contents legally; credit restriction and credit control; selecting for the system the IPTV media control functions which mainly aim at IPTV services such as video on demand, live broadcast, video recording and time shifted etc. The functions are one SIP application server for initiatively originating content to push to the UE in the circumstance of IMS network.

IPTV MF 14 is connected with the UE via interfaces of Xc and Xd, wherein the connection with the UE via the Xc interface is used for media stream RTSP control, while the connection with the UE via the Xd interface for media stream transmission and media download. The functions can serve as multicast source of live broadcast media stream and in this case, multicast stream is delivered form the IPTV MF 14 to the transport processing functions 15 and then delivered from the transport processing functions 15 to the UE 11.

Transport processing functions 15 are network access connection and IP core functions, and are responsible for data transmission on the premise of guaranteeing the QoS. Transport processing functions 15 specifically comprise elementary control function (ECF), elementary forwarding function (EFF) and border gateway function etc.

In the above, the EFF serves to forward data flow received from one flow point entrance to one or more other flow point exits, wherein for uni-cast, there is only one flow point exit, while for multicast, there are a plurality of flow point exits.

The ECF serves to process control protocol data (such as routing protocol data) of uni-cast and multicast data received from one flow point and may have the functions of transmitting the control protocol data to other ECFs (including events of triggering strategy estimation); interacting with one or more EFFs to suggest a new forwarding push behavior or modify the current forwarding push behavior in the EFF; and interacting with other functions within the transport processing functions.

SSF 16 serves to provide service selection information such as a list of services which the terminals can access.

RACS 17 serves to complete a resource control request received from Core IMS module, determine transported resources available and interact with a bearer layer to complete functions such as bandwidth reservation, distribution, packet filtering, network address and port translation etc.

On the basis of the above system, there is first provided according to an embodiment of the present invention a system for pushing information based on IPTV, to achieve initiatively pushing information to a UE by a network side.

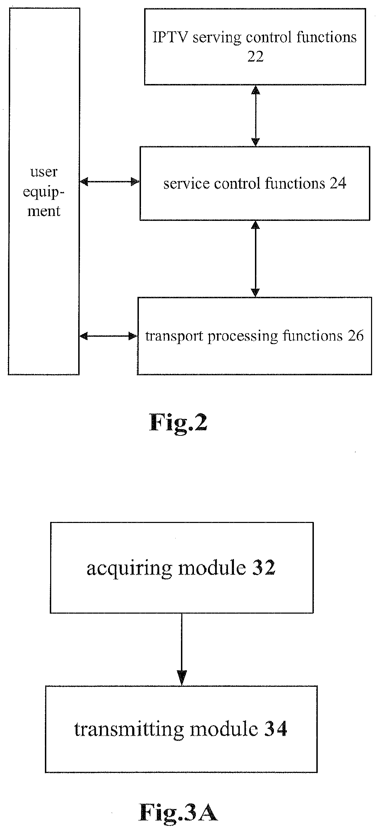

Figure 2 is a structure block diagram of the system for pushing information based on IPTV according to the embodiment of the present invention. As shown in Figure 2, the system for pushing information based on IPTV according to the embodiment of the present invention comprises IPTV serving control functions 22, service control functions 24 and transport processing functions 26. The above entities will be described in details in combination with the accompanying drawings as follows.

IPTV serving control functions 22 are configured to transmit a session initiation request for broadcasting information to a UE via service control functions 24.

The service control functions 24, connected with IPTV serving control functions 22 and the UE via network, are configured to receive the session initiation request from IPTV serving control functions 22 and forward the session initiation request to the UE according to the information carried in the session initiation request. In practice, if the IMS system is adopted in the system applied, the service control functions 24 refer to the Core IMS in the IMS.

The transport processing functions 26, connected with service control functions 24 and the UE via network, are configured to interact with the UE and transmit multicast stream to the UE.

In the above, the information comprises live broadcast services, i.e. information, which is recommended by IPTV serving control functions 22 via the session initiation request to UE to broadcast, is live broadcast service. After receiving the session initiation request, the UE can select to watch the live broadcast program provided by the live broadcast service, or refuse watching and sends the selection result to IPTV serving control functions 22 via a response message. When the user selects to watch the live broadcast program provided by the live broadcast service, the transport processing functions 26 transmit the multicast stream of the live broadcast service to the UE.

Moreover, the above live broadcast service is obtained by statistically analyzing the preference information of selected content of the UE, or the live broadcast program provided by the live broadcast service is a live broadcast program whose click rate is currently high.

Further, to facilitate the judgment of the UE whether to broadcast the live broadcast program provided by the live broadcast service, the IPTV serving control functions are also configured to carry a request parameters in the session initiation request transmitted, wherein the request parameters may include but is not limited within the following contents:
(1) push identifier information for indicating that the recommended live broadcast service is a live broadcast program of the channel that needs to be watched directly, rather than media file or media stream that needs to be stored or other situations such as pushing the video on demand programs that the UE needs to watch directly;
(2) description information of the contents of the recommended live broadcast programs such as the title of the program, the leading actors or actress, brief description of the plot and so on;
(3) information such as duration of the program and so on.

Of course, identification information list including the unique identification of the UE also needs to be included in the request parameters to indicate to which UE the session initiation request shall be sent. There can be one or more identifications in the identification information list.

That the network side can initiatively push live broadcast service to the UE can be achieved in virtue of the system for pushing information based on IPTV according to the embodiment of the present invention.

According to an embodiment of the present invention, there are also provided IPTV serving control functions, which are applicable in the above system for pushing information based on IPTV.

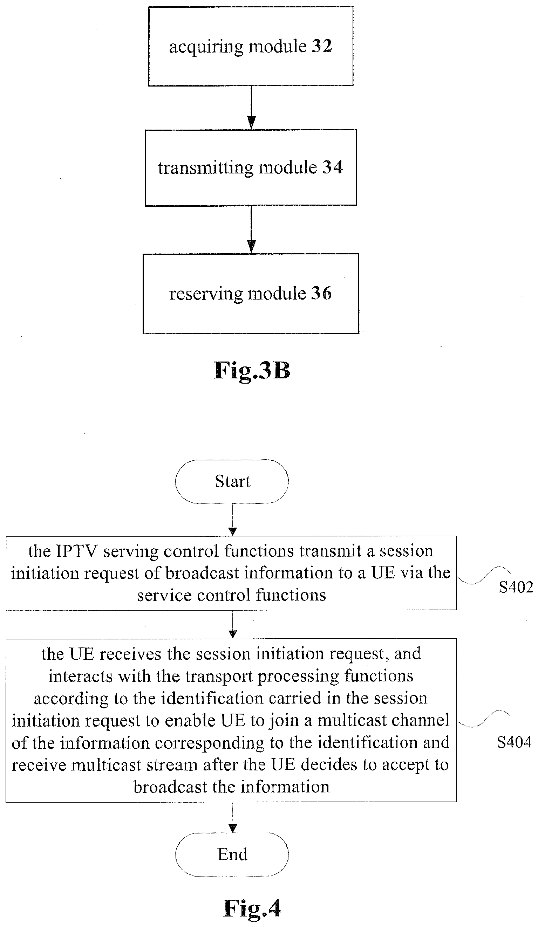

Figure 3A is a structure block diagram of the IPTV serving control functions according to the embodiment of the present invention and Figure 3B is a structure block diagram of the IPTV serving control functions according to the preferable embodiment of the present invention. As shown in figure 3A, the IPTV serving control functions according to the embodiment of the present invention comprise an acquiring module 32 and a transmitting module 34. The above modules will be described in details in combination with the accompanying drawings as follows.

The acquiring module 32 is configured to acquire identification of information recommended to user.

The transmitting module 34, connected with the acquiring module 32, is configured to transmit to the UE the session initiation request in which the above identification is carried via service control functions, wherein the session initiation request is used to request the UE to broadcast the information corresponding to the identification.

Further, as shown in Figure 3B, the IPTV serving control functions provided by the embodiment of the present invention also comprise: a reserving module 36, configured to establish channel of the above information with the UE and reserve resources required by the user equipment to broadcast the above information.

Preferably, the above information is live broadcast service.

It is possible to initiate a session initiation request and recommend information to the UE initiatively according to the above IPTV serving control functions in the embodiment of the present invention.

According to an embodiment of the present invention, there is provided a method for pushing information based on IPTV. The method is applied in a system comprising IPTV serving control functions, service control functions and transport processing functions. This method can be implemented by the above IPTV serving control functions or the system for pushing information.

Figure 4 is a flow chart of the method for pushing information based on IPTV according to the embodiment of the present invention. As shown in figure 4, the method for pushing information based on IPTV according to the embodiment of the present invention mainly comprises the following steps (Steps S402 to S404):
Step S402, the IPTV serving control functions transmit a session initiation request for broadcasting information to a UE via the service control functions, wherein identification of the above information is carried in the session initiation request; and
Step S404, the UE receives the session initiation request, and after the UE decides to accept broadcasting the above information, interacts with the transport processing functions according to the identification carried in the session initiation request to enable UE to join a multicast channel of the information corresponding to the identification and receive multicast stream.

The above steps will be described in details as follows.

### (I) Step S402

The processing of this step can be carried out in two steps as follows.

Step 1: the IPTV serving control functions transmit the session initiation request to service control functions, wherein in the session initiation request there are carried identification of recommended information and a identification information list of the unique identification of the UE, which indicates transmitting the above session initiation request to the UEs corresponding to one or more identifications in the identification information list to request the UEs to broadcast the recommended information.

Preferably, the IPTV can also carry description information related to the recommended information in the session initiation request, for example, describing the information belonging to programs such as news, sports or interview.

In practice, to reduce blindness in the recommendation resulting in frequent disturbing users, the IPTV serving control functions analyze which type of the programs the user likely prefers according to preferences of contents selected by the UE so as to recommend users the information of their favorite information type; or the IPTV serving control functions recommend users the information whose click rate is currently high.

Step 2: the service control functions forward the above session initiation request to the UE corresponding to each identification in the identification information list according to the identification information list carried in the session initiation request.

In practice, the above information may be live broadcast service. When the above information is live broadcast service, the following information may be carried in the session initiation request:
push identifier information for identifying that the recommended live broadcast service is a live broadcast program of the channel the user needs watch directly, rather than media file or media stream that needs to be stored or pushed video on demand programs;
content description information of the live broadcast programs such as the title of the program, the leading actors or actress, brief description of the plot and so on; and duration, start time or end time of the program.

Moreover, when the recommended information is a live broadcast service, IPTV serving control functions transmit the above session initiation request to the UE before the live program provided by the live broadcast service is broadcasted.

### (II) Step 404

After the service control functions transmit the above session initiation request to the UE needing recommendation, the UE having received the session initiation request judges whether it is needed to broadcast the information recommended by the IPTV serving control functions according to pre-configuration or the selection of the user, and sends the judgment result carried in a response message of the above session initiation request to the IPTV serving control functions via the service control functions. The IPTV serving control functions judge whether the UE accepts broadcasting the above information according to the information carried in the response message.

When determining to accept broadcasting the above information, the UE transmits a request for joining the multicast channel of the information corresponding to the identification to the transport processing functions according to the identification of information carried in the received session initiation request. The UE joins the multicast channel of that information by interacting with the transport processing functions and receives multicast streams sent by the transport processing functions to broadcast the above information.

In practice, when the UE determines to accept broadcasting the above information, signaling delivery needs to be conducted between the UE and the IPTV serving control functions to reserve resources for transmitting the information content stream. This process can be carried out by two manners as follows.
Manner 1: UE initiates a request actively.
   Step 1: the UE sends a media providing request for establishing one or more content delivery channels to the service control functions.
   Step 2: the resource reservation is conducted between the service control functions (corresponding to the P-CSCF in the Core IMS in the case that the IMS system is used in the NGN System) and the resource and admission control subsystem according to the information in the media providing request.
   Step 3: the service control functions (or P-CSCF) initiate a media providing request for establishing one or more content delivery channels to the IPTV serving control functions.
   Step 4: the IPTV serving control functions return a media providing response of the content delivery channels to the service control functions.
   Step 5: the resource reservation is updated between the service control functions (or P-CSCF) and the resource and admission control subsystem, which. in practice, may be either performed or not, according to specific requirements.
   Step 6: the service control functions (or P-CSCF) return a media providing response of the content delivery channels to the UE.
Manner 2: the IPTV serving control functions initiate the request.

Step 1: the IPTV serving control functions initiate a media providing request for establishing one or more content delivery channels to the service control functions (corresponding to the P-CSCF in the Core IMS in case of IMS).

Step 2: the resource reservation is conducted between the service control functions (or P-CSCF) and the resource and admission control subsystem.

Step 3: the service control functions initiate a media providing request for establishing one or more content delivery channels to the UE.

Step 4: the UE returns a media providing response of the content delivery channels to the service control functions (or P-CSCF).

Step 5: the resource reservation is updated between the service control functions (or P-CSCF) and the resource and admission control subsystem.

Step 6: the service control functions (or P-CSCF) return a media providing response of the content delivery channels to the IPTV serving control functions.

After judging whether to broadcast the information recommended by the IPTV serving control functions, the UE will send the judgment result carried in a response message of the session initiation request to the IPTV serving control functions via the service control functions. The service control functions judge whether UE broadcasts the above information according to the identification information carried in the response message identifying whether the UE broadcasts the above information. When the judgment result is yes, the service control functions interact with the resource and admission control subsystem, submit the above reserved resources and forward the above response message to the IPTV serving control functions; while when the judgment result is no, the service control functions interact with the resource and admission control subsystem, release the above reserved resources and forward the response message to the IPTV serving control functions, and after receiving the response message, the IPTV serving control functions determine that UE refuses broadcasting the above information according to the received response message, the flow ends and no more subsequent processing will be performed.

By the above method in the embodiment of the present invention, that the network side can initiatively pushes broadcast information to the UE can be achieved, which increases content services achieved by operators.

To further describe the embodiment of the above method, it will be illustrated in details taking the situation that the recommended information is the live broadcast service as an example.

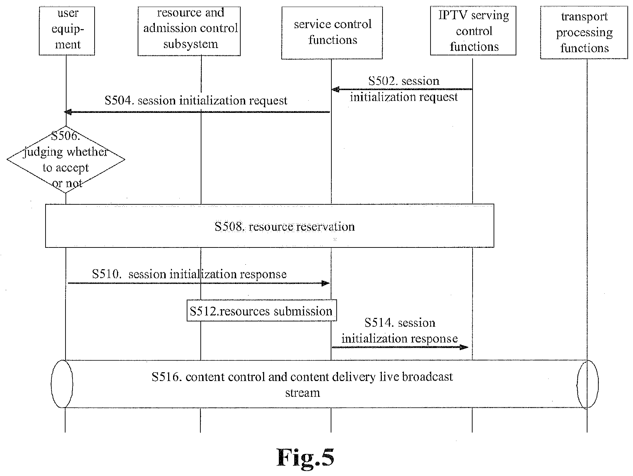

Figure 5 is a flow chart of a detailed implementing process of the embodiment of the present invention. As shown in Figure 5, the detailed implementing of the embodiment comprises steps as follows.

Step S502, the IPTV serving control functions actively initiate a live broadcast service initialization session aiming at live broadcast service packet (a complete audio and video program consisting of contents, metadata etc.) wherein the initialization request of the session requests the service control functions for live broadcast services.

In the above, in the initialization request there is carried request parameters, which can specifically include information such as push identifier information, content description information of live broadcast programs of the recommended channel and duration of the program etc. Meanwhile in the request parameter, there is also included an identification information list of the unique identification of the UE, in which there can be identifications of one or more UEs.

Moreover, to identify the live broadcast service requested for the UE, the identification of the live broadcast service needs to be carried in the initialization request.

Step S504, the service control functions forward the above initialization request to the UE corresponding to each identification in the identification information list according to the identification information list carried in above the initialization request.

Step S506: it is judged whether the UE accepts broadcasting the live broadcast service flow of the channel wherein if yes, it continues performing step S508, otherwise, it performs step S510.

Step S508: signaling process for establishing one or more content delivery channels is conducted between the IPTV serving control functions and the UE, wherein the content delivery channel serves to process live broadcast services and the main object of establishing the signaling process is to perform resource reservation and bandwidth allocation so as to guarantee the Quality of Service of the live broadcast of channel and so on.

Step S510: the UE forwards to the service control functions a session initialization response message, in which the identification information about whether the UE accepts broadcasting the live broadcast service of the above channel is carried wherein if in step S506 it is judged UE refuses broadcasting immediately the live broadcast service stream of the channel, it performs step S514, otherwise it performs step S512.

Step 512: the service control functions (corresponding to the P-CSCF of the Core IMS in case of the IMS system) and the resource and admission control subsystem deliver and submit all the resource information reserved in step 508, and activate the live broadcast service packet in the transmission network at the network edge so that the UE can join the multicast stream.

Step S514: the service control functions forward to the IPTV serving control functions the session initialization response message sent by the UE wherein if the identification information carried in the response message indicates that the UE refuses broadcasting the live broadcast service of the above channel, the flow is ended, otherwise it perform steps S516.

Step S516: the UE interacts with the transport processing functions in transport network, joins the multicast channel and begins to accept multicast stream to perform content control and transmission of the content delivery live broadcast stream.

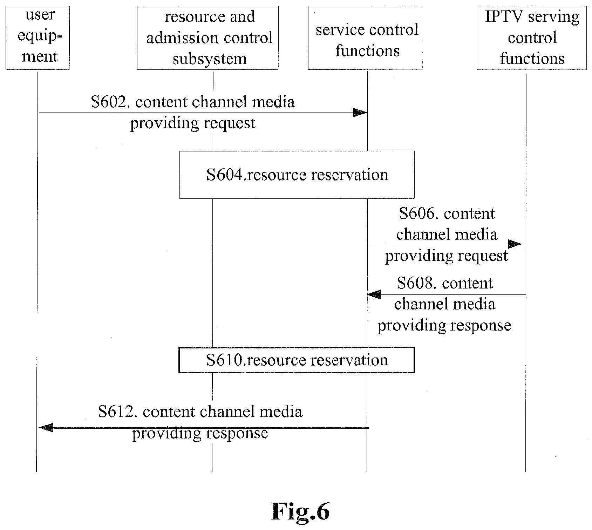

When performing Step S508, if the acquisition of network parameter by the UE occurs before session initialization, i.e. this step is triggered from service selection function, step S508 of the embodiment is performed after the UE initiates the live broadcast service request. Figure 6 shows a detailed implementation for step S508 in this circumstance. As shown in Figure 6, the process specifically comprises steps as follows.

Step S602: the UE sends a media providing request for establishing one or more content delivery channels to the service control functions.

Step S604: the resource reservation is conducted between the service control functions (or P-CSCF) and the resource and admission control subsystem according to the information in the media providing request.

Step S606: the service control functions (or P-CSCF) initiate a media providing request for establishing one or more content delivery channels to the IPTV serving control functions.

Step S608: the IPTV serving control functions return a media providing response of the content delivery channels to the service control functions.

Step S610: the resource reservation is updated between the service control functions (or P-CSCF) and the resource and admission control subsystem. In practice, this step can be either performed or not according to specific requirements.

Step S612: the service control functions (or P-CSCF) return a media providing response of the content delivery channels to the UE.

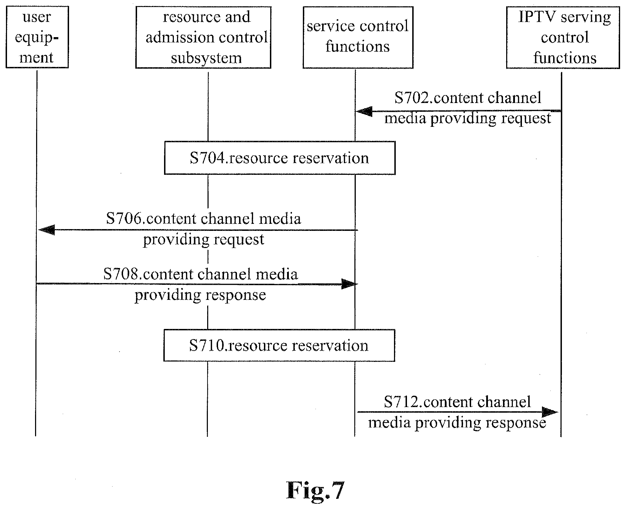

If the acquisition of network parameter by the UE occurs in the process of session initialization, the detailed implementation for Step S508 is as shown in Figure 7 as follows.

Step S702: the IPTV serving control functions initiate a media providing request for establishing one or more content delivery channels to the service control functions (corresponding to P-CSCF in the Core IMS in the case of IMS);
Step S704: the resource reservation is conducted between the service control functions (or P-CSCF) and the resource and admission control subsystem;
Step S706: the service control functions initiate a media providing request for establishing one or more content delivery channels to the UE;
Step S708: the UE returns a media providing response of the content delivery channels to the service control functions (or P-CSCF);
Step S710: the resource reservation is updated between the service control functions (or P-CSCF) and the resource and admission control subsystem.

Step S712: the service control functions (or P-CSCF) return a media providing response of the content delivery channels to the IPTV serving control functions.
As stated above, by means of the technical solution provided by the embodiment of the present invention, the IPTV serving control functions can initiatively send a session initiation request to the UE to request the UE to broadcast certain information and push information to the UE. Users having received the above request can select to immediately watch the information recommended by the network side, which therefore increases content services achieved by operators and strengthens the competitiveness of the IPTV system. Moreover, the IPTV serving control functions can push the information with a certain purpose to the UE according to selection or preference of the UE, thus avoiding random pushing, which improves the experience of the user.

Above description is only to illustrate the preferred embodiments but not to limit the present invention. Various alterations and changes to the present invention are apparent to those skilled in the art.

## Claims

1. A method for pushing information based on internet protocol television, applied in a Next Generation Network system comprising Internet Protocol Television, IPTV, serving control functions (13), service control functions (12) and transport processing functions (15), wherein the method comprises:
the IPTV serving control functions (13) transmitting a session initiation request of broadcasting information to a user equipment (11) via the service control functions (12), wherein identification of the information is carried in the session initiation request, wherein the information is live broadcast service to be broadcasted and the IPTV serving control functions (13) transmitting the session initiation request to the user equipment (11) via the service control functions (12) comprises: before the live broadcast service is broadcasted, the IPTV serving control functions (13) transmitting the session initiation request to the user equipment (11); and
the user equipment (11) receiving the session initiation request, and interacting with the transport processing functions (15) according to the identification carried in the session initiation request to enable the user equipment (11) to join a multicast channel of the information corresponding to the identification and receive multicast stream after the user equipment (11) decides to accept broadcasting the information,
wherein the live broadcast service provides a live broadcast program which is the one whose click rate is currently high,
wherein the step of the IPTV serving control functions (13) transmitting a session initiation request of broadcasting information to a user equipment (11) via the service control functions (12) comprises:
the IPTV serving control functions (13) transmitting the session initiation request to the service control functions (12), wherein request parameters including an identification information list of unique identifications of user equipments are carried in the session initiation request; and
the service control functions (12) forwarding the session initiation request to one or more user equipments corresponding to each identification recorded in the identification information list according to the identification information list carried in the session initiation request.

2. The method according to claim 1, **characterized in that** before the user equipment (11) interacts with the transport processing functions (15), the method also comprises:
the IPTV serving control functions (13) and the user equipment (11) establishing a channel of the information and reserving resources required by the user equipment broadcasting the information.

3. The method according to claim 2, **characterized in that** after reserving the resources required by the user equipment (11) broadcasting the information, the method further comprises:
the service control functions (12) receiving a session initiation response message from the user equipment (11), wherein identification information for identifying whether the user equipment (11) broadcasts the information is carried in the session initiation response message; and
the service control functions (12) judging whether the user equipment (11) accepts broadcasting the information according to the identification information carried in the session initiation response message, wherein when the judgment result is yes, the service control functions (12) submit the reserved resources and forward the session initiation response message to the IPTV serving control functions (13), while when the judgment result is no, the service control functions (12) forward the session initiation response message to the IPTV serving control functions (13) and end the flow.

4. The method according to claim 1, **characterized in that** in the case that multimedia sub-system is adopted in the Next Generation Network, the service control functions (12) are core multimedia sub-system.

5. A system for pushing information based on IPTV, comprising IPTV serving control functions (22), service control functions (24) and transport processing functions (26), wherein:
the IPTV serving control functions (22) are configured to transmit a session initiation request of broadcasting information to a user equipment via the service control functions (24), wherein identification of the information is carried in the session initiation request and the information is live broadcast service to be broadcasted and the IPTV serving control functions (22) are further configured to transmit the session initiation request to the user equipment before the live broadcast service is broadcasted;
the service control functions (24) are configured to receive the session initiation request from the IPTV serving control functions (22) and forward the session initiation request to the user equipment according to the identification carried in the session initiation request; and
the transport processing functions (26) are configured to interact with the user equipment and transmit a multicast stream to the user equipment,
wherein the live broadcast service provides a live broadcast program which is the one whose click rate is currently high,
wherein the IPTV serving control functions (22) are further configured to transmit the session initiation request to the service control functions (24), wherein request parameters including an identification information list of unique identifications of user equipments are carried in the session initiation request; and the service control functions (24) are further configured to forward the session initiation request to one or more user equipments corresponding to each identification recorded in the identification information list according to the identification information list carried in the session initiation request.

6. The system according to claim 5, **characterized in that** the service control functions (24) are core multimedia sub-system.

7. IPTV serving control functions, comprising:
an acquiring module (32), configured to acquire identification of information recommended to a user; and
a transmitting module (34), configured to transmit a session initiation request in which the identification is carried to a user equipment via service control functions, wherein the session initiation request is used to request the user equipment to broadcast the information corresponding to the identification;
wherein the information is live broadcast service to be broadcasted and the transmitting module is further configured to transmit the session initiation request to the user equipment before the live broadcast service is broadcasted;
wherein the live broadcast service provides a live broadcast program which is the one whose click rate is currently high,
wherein the transmitting module (34) is further configured to transmit the session initiation request to the service control functions, wherein request parameters including an identification information list of unique identifications of user equipments are carried in the session initiation request.

8. The IPTV serving control functions according to claim 7, **characterized in that** the IPTV serving control functions also comprise:
a reserving module (36), configured to establish channel of the information with the user equipment and reserve resources required by the user equipment broadcasting the information.

## Patentansprüche

1. Verfahren für Informations-Push auf der Basis von Internet-Protokoll-Fernsehen, das in einem Next-Generation-Network-System angewendet wird, das Internet-Protokoll-Fernsehen IPTV, Unterstützungssteuerfunktionen (13), Dienststeuerfunktionen (12) und Transportverarbeitungsfunktionen (15) umfasst, wobei das Verfahren umfasst:
Übertragen einer Sitzungseinleitungsanforderung zum Rundsenden von Informationen über die Dienststeuerfunktionen (12) an ein Benutzergerät (11) durch die IPTV-Unterstützungssteuerfunktionen (13), wobei die Identifikation der Informationen in der Sitzungseinleitungsanforderung befördert wird, wobei die Informationen ein Live-Rundfunksendungsdienst, der rundgesendet werden soll, sind, und wobei das Übertragen der Sitzungseinleitungsanforderung über die Dienststeuerfunktionen (12) an das Benutzergerät (11) durch die IPTV-Unterstützungssteuerfunktionen (13) umfasst: bevor der Live-Rundfunkdienst rundgesendet wird, Übertragen der Sitzungseinleitungsanforderung an das Benutzergerät (11) durch die IPTV-Unterstützungssteuerfunktionen (13); und
Empfangen der Sitzungseinleitungsanforderung durch das Benutzergerät (11) und Interagieren mit den Transportverarbeitungsfunktionen (15) gemäß der Identifikation, die in der Sitzungseinleitungsanforderung befördert wird, um zu ermöglichen, dass das Benutzergerät (11) einem Multicast-Kanal der Informationen beitritt, die der Identifikation entsprechen, und den Multicast-Strom empfängt, nachdem das Benutzergerät (11) entschieden hat, das Rundsenden der Informationen zu akzeptieren,
wobei der Live-Rundfunkdienst ein Live-Rundfunkprogramm bereitstellt, welches das ist, dessen Klickrate aktuell hoch ist,
wobei der Schritt des Übertragens einer Sitzungseinleitungsanforderung für Rundfunkinformationen an ein Benutzergerät (11) über die Dienststeuerfunktionen (12) durch die IPTV-Unterstützungssteuerfunktionen (13) umfasst:
Übertragen der Sitzungseinleitungsanforderung an die Dienststeuerfunktionen (12) durch die IPTV-Unterstützungssteuerfunktionen (13), wobei Anforderungsparameter, die eine Identifikationsinformationsliste mit eindeutigen Identifikationen von Benutzergeräten umfassen, in der Sitzungseinleitungsanforderung befördert werden; und
Weiterleiten der Sitzungseinleitungsanforderung an ein oder mehrere Benutzergeräte, die jeder Identifikation entsprechen, die in der Identifikationsinformationsliste gemäß der in der Sitzungseinleitungsanforderung beförderten Identifikationsinformationsliste aufgezeichnet ist, durch die Dienststeuerfunktionen (12).

2. Verfahren nach Anspruch 1, **dadurch gekennzeichnet, dass** das Verfahren, bevor das Benutzergerät (11) mit den Transportverarbeitungsfunktionen (15) interagiert, auch umfasst:
Einrichten eines Kanals für die Informationen und Reservieren von Ressourcen, die von dem Benutzergerät, das die Informationen rundsendet, benötigt werden, durch die IPTV-Unterstützungssteuerfunktionen (13) und das Benutzergerät (11).

3. Verfahren nach Anspruch 2, **dadurch gekennzeichnet, dass** das Verfahren nach dem Reservieren der Ressourcen, die von dem Benutzergerät, das die Informationen rundsendet, benötigt werden, ferner umfasst:
Empfangen einer Sitzungseinleitungsantwortnachricht von dem Benutzergerät (11) durch die Dienststeuerfunktionen (12), wobei die Identifikationsinformationen zum Identifizieren, ob das Benutzergerät (11), die Informationen rundsendet, in der Sitzungseinleitungsantwortnachricht befördert werden; und
Beurteilen, ob das Benutzergerät (11) das Fundsenden der Informationen gemäß den in der Sitzungseinleitungsantwortnachricht beförderten Identifikationsinformationen akzeptiert, durch die Dienststeuerfunktionen (12), wobei die Dienststeuerfunktionen (12) die reservierten Ressourcen beantragen und die Sitzungseinleitungsantwort an die IPTV-Unterstützungssteuerfunktionen (13) weiterleiten, wenn das Beurteilungsergebnis ja ist, während die Dienststeuerfunktionen (12) die Sitzungseinleitungsantwortnachricht an die IPTV-Unterstützungssteuerfunktionen (13) weiterleiten und den Strom beenden, wenn das Beurteilungsergebnis nein ist.

4. Verfahren nach Anspruch 1, **dadurch gekennzeichnet, dass** die Dienststeuerfunktionen (12) in dem Fall, in dem ein Multimedia-Subsystem in dem Next Generation Network verwendet wird, ein Kern-Multimedia-Subsystem sind.

5. System für Informations-Push auf der Basis von IPTV, das IPTV-Unterstützungssteuerfunktionen (22), Dienststeuerfunktionen (24) und Transportverarbeitungsfunktionen (26) umfasst, wobei:
die IPTV-Unterstützungssteuerfunktionen (22) konfiguriert sind, um eine Sitzungseinleitungsanforderung zum Rundsenden von Informationen über die Dienststeuerfunktionen (24) an ein Benutzergerät zu übertragen, wobei die Identifikation der Informationen in der Sitzungseinleitungsanforderung befördert wird, wobei die Informationen ein Live-Rundfunksendungsdienst, der rundgesendet werden soll, sind, und wobei die IPTV-Unterstützungssteuerfunktionen (22) ferner konfiguriert sind, um die Sitzungseinleitungsanforderung an das Benutzergerät zu übertragen, bevor der Live-Rundfunkdienst rundgesendet wird;
die Dienststeuerfunktionen (24) konfiguriert sind, um die Sitzungseinleitungsanforderung von den IPTV-Unterstützungssteuerfunktionen (22) zu empfangen und die Sitzungseinleitungsanforderung gemäß der in der Sitzungseinleitungsanforderung beförderten Identifikation an das Benutzergerät weiterzuleiten; und
die Transportverarbeitungsfunktionen (26) konfiguriert sind, um mit dem Benutzergerät zu interagieren und einen Multicast-Strom an das Benutzergerät zu übertragen,
wobei der Live-Rundfunkdienst ein Live-Rundfunkprogramm bereitstellt, welches das ist, dessen Klickrate aktuell hoch ist,
wobei die IPTV-Unterstützungssteuerfunktionen (22) ferner konfiguriert sind, um die Sitzungseinleitungsanforderung an die Dienststeuerfunktionen (24) zu übertragen, wobei Anforderungsparameter, die eine Identifikationsinformationsliste mit eindeutigen Identifikationen von Benutzergeräten umfassen, in der Sitzungseinleitungsanforderung befördert werden; und die Dienststeuerfunktionen (24) ferner konfiguriert sind, um die Sitzungseinleitungsanforderung an ein oder mehrere Benutzergeräte weiterzuleiten, die jeder Identifikation entsprechen, die in der Identifikationsinformationsliste gemäß der in der Sitzungseinleitungsanforderung beförderten Identifikationsinformationsliste aufgezeichnet ist.

6. System nach Anspruch 5, **dadurch gekennzeichnet, dass** die Dienststeuerfunktionen (24) ein Kern-Multimedia-Subsystem sind.

7. IPTV-Unterstützungssteuerfunktionen, die umfassen:
ein Erfassungsmodul (32), das konfiguriert ist, um die Identifikation von Informationen, die einem Benutzer empfohlen werden, zu erfassen; und
ein Sendemodul (34), das konfiguriert ist, um eine Sitzungseinleitungsanforderung, in der die Identifikation zu einem Benutzergerät befördert wird, über Dienststeuerfunktionen zu übertragen, wobei die Sitzungseinleitungsanforderung verwendet wird, um das Benutzergerät aufzufordern, die der Identifikation entsprechenden Informationen rundzusenden;
wobei die Informationen ein Live-Rundfunkdienst sind, der rundgesendet werden soll, und das Sendemodul ferner konfiguriert ist, um die Sitzungseinleitungsanforderung an das Benutzergerät zu übertragen, bevor der Live-Rundfunkdienst rundgesendet wird;
wobei der Live-Rundfunkdienst ein Live-Rundfunkprogramm bereitstellt, welches das ist, dessen Klickrate aktuell hoch ist,
wobei das Übertragungsmodul (34) ferner konfiguriert ist, um die Sitzungseinleitungsanforderung an die Dienststeuerfunktionen zu übertragen, wobei Anforderungsparameter, die eine Identifikationsinformationsliste mit eindeutigen Identifikationen von Benutzergeräten umfassen, in der Sitzungseinleitungsanforderung befördert werden.

8. IPTV-Unterstützungssteuerfunktionen nach Anspruch 7, **dadurch gekennzeichnet, dass** die IPTV-Unterstützungssteuerfunktionen auch umfassen:
ein Reservierungsmodul (36), das konfiguriert ist, um einen Kanal für die Informationen mit dem Benutzergerät einzurichten und Ressourcen, die von dem Benutzergerät, das die Informationen rundsendet, benötigt werden, zu reservieren.

## Revendications

1. Procédé pour pousser des informations basées en télévision sur Internet Protocol, appliqué dans un système de réseau Next Generation Network (réseau NGN) comprenant la télévision sur Internet Protocol IPTV, des fonctions de commande de desserte (13), des fonctions de commande de service (12) et des fonctions de traitement de transport (15), le procédé comprenant :
les fonctions de commande de desserte IPTV (13) transmettant une demande d'initiation de session consistant à diffuser des informations à un équipement utilisateur (11) par l'intermédiaire des fonctions de commande de service (12), dans lequel l'identification des informations est réalisée dans la demande d'initiation de session, dans lequel les informations sont un service de diffusion en direct à diffuser et les fonctions de commande de desserte IPTV (13) transmettant la demande d'initiation de session à l'équipement utilisateur (11) par l'intermédiaire des fonctions de commande de service (12) comprennent : avant la diffusion du service de diffusion en direct, les fonctions de commande de desserte IPTV (13) transmettant la demande d'initiation de session à l'équipement utilisateur (11) ; et
l'équipement utilisateur (11) recevant la demande d'initiation de session, et entrant en interaction avec les fonctions de traitement de transport (15) en fonction de l'identification portée dans la demande d'initiation de session pour permettre à l'équipement utilisateur (11) de rejoindre un canal de multidiffusion des informations correspondant à l'identification et recevoir un flux de multidiffusion après que l'équipement utilisateur (11) a décidé d'accepter la diffusion des informations,
dans lequel le service de diffusion en direct fournit un programme de diffusion en direct qui est celui dont le taux de clics est actuellement élevé,
dans lequel l'étape des fonctions de commande de desserte IPTV (13) transmettant une demande d'initiation de session consistant à diffuser des informations à un équipement utilisateur (11) par l'intermédiaire des fonctions de commande de service (12) comprend :
les fonctions de commande de desserte IPTV (13) transmettant la demande d'initiation de session aux fonctions de commande de service (12), dans lesquelles les paramètres de demande, incluant une liste d'informations d'identification d'identifications uniques d'équipements utilisateurs, sont portés dans la demande d'initiation de session ; et
les fonctions de commande de service (12) faisant suivre la demande d'initiation de session à un ou plusieurs équipements utilisateurs correspondant à chaque identification enregistrée dans la liste d'informations d'identification selon la liste d'informations d'identification portée dans la demande d'initiation de session.

2. Procédé selon la revendication 1, **caractérisé en ce que**, avant que l'équipement utilisateur (11) n'entre en interaction avec les fonctions de traitement de transport (15), le procédé comprend également :
les fonctions de commande de desserte IPTV (13) et l'équipement utilisateur (11) établissant un canal des informations et réservant les ressources nécessitées par l'équipement utilisateur diffusant les informations.

3. Procédé selon la revendication 2, **caractérisé en ce que**, après la réservation des ressources nécessitées par l'équipement utilisateur (11) diffusant les informations, le procédé comprend en outre :
les fonctions de commande de service (12) recevant un message de réponse d'initiation de session provenant de l'équipement utilisateur (11), dans lequel des informations d'identification pour identifier si l'équipement utilisateur (11) diffuse les informations sont portées dans le message de réponse d'initiation de session ; et
les fonctions de commande de service (12) jugeant si l'équipement utilisateur (11) accepte la diffusion des informations selon les informations d'identification portées dans le message de réponse d'initiation de session, dans lequel si le résultat de jugement est oui, les fonctions de commande de service (12) soumettent les ressources réservées et font suivre le message de réponse d'initiation de session aux fonctions de commande de desserte IPTV (13), alors que si le résultat de jugement est non, les fonctions de commande de service (12) font suivre le message de réponse d'initiation de session aux fonctions de commande de desserte IPTV (13) et mettent fin au flux.

4. Procédé selon la revendication 1, **caractérisé en ce que**, dans le cas où ce sous-système multimédia est adopté dans le réseau NGN, les fonctions de commande de service (12) sont un sous-système multimédia central.

5. Système pour pousser des informations basées sur l'IPTV, comprenant des fonctions de commande de desserte IPTV (22), des fonctions de commande de service (24) et des fonctions de traitement de transport (26), dans lequel :
les fonctions de commande de desserte IPTV (22) sont configurées pour transmettre une demande d'initiation de session consistant à diffuser des informations à un équipement utilisateur par l'intermédiaire des fonctions de commande de service (24), dans lequel l'identification des informations est portée dans la demande d'initiation de session et les informations sont un service de diffusion en direct à diffuser et les fonctions de commande de desserte IPTV (22) sont en outre configurées pour transmettre la demande d'initiation de session à l'équipement utilisateur avant la diffusion du service de diffusion en direct ;
les fonctions de commande de service (24) sont configurées pour recevoir la demande d'initiation de session provenant des fonctions de commande de desserte IPTV (22) et faire suivre la demande d'initiation de session à l'équipement utilisateur en fonction de l'identification portée dans la demande d'initiation de session ; et
les fonctions de traitement de transport (26) sont configurées pour entrer en interaction avec l'équipement utilisateur et transmettre un flux multimédia à l'équipement utilisateur,
dans lequel le service de diffusion en direct fournit un programme de diffusion en direct qui est celui dont le taux de clics est actuellement élevé,
dans lequel les fonctions de commande de desserte IPTV (22) sont en outre configurées pour transmettre la demande d'initiation de session aux fonctions de commande de service (24), dans lequel des paramètres de demande incluant une liste d'informations d'identification d'identifications uniques d'équipements utilisateurs sont portés dans la demande d'initiation de session ; et les fonctions de commande de service (24) sont en outre configurées pour faire suivre la demande d'initiation de session à un ou plusieurs équipements utilisateurs correspondant à chaque identification enregistrée dans la liste d'informations d'identification en fonction de la liste d'informations d'identification portée dans la demande d'initiation de session.

6. Système selon la revendication 5, **caractérisé en ce que** les fonctions de commande de service (24) sont un sous-système multimédia central.

7. Fonctions de commande de desserte IPTV, comprenant :
un module d'acquisition (32), configuré pour acquérir l'identification d'informations recommandées à un utilisateur ; et
un module de transmission (34), configuré pour transmettre une demande d'initiation de session dans laquelle l'identification est portée à un équipement utilisateur par l'intermédiaire de fonctions de commande de service,
dans lesquelles la demande d'initiation de session est utilisée pour demander à l'équipement utilisateur de diffuser les informations correspondant à l'identification ;
dans lesquelles les informations sont un service de diffusion en direct à diffuser et le module de transmission est en outre configuré pour transmettre la demande d'initiation de session à l'équipement utilisateur avant la diffusion du service de diffusion en direct ;
dans lesquelles le service de diffusion en direct fournit un programme de diffusion en direct qui celui dont le taux de clics est actuellement élevé,
dans lesquelles le module de transmission (34) est en outre configuré pour transmettre la demande d'initiation de session aux fonctions de commande de service, des paramètres de demande incluant une liste d'informations d'identification d'identifications uniques d'équipements utilisateurs étant portés dans la demande d'initiation de session.

8. Fonctions de commande de desserte IPTV selon la revendication 7, **caractérisées en ce que** les fonctions de commande de desserte IPTV comprennent également :
un module de réservation (36), configuré pour établir un canal des informations avec l'équipement utilisateur et réserve des ressources nécessitées par l'équipement utilisateur diffusant les informations.
